(19) Europäisches Patentamt

European Patent Office

Office européen des brevets

(11) Veröffentlichungsnummer: **0 311 699 B1**

(12) **EUROPÄISCHE PATENTSCHRIFT**

(45) Veröffentlichungstag der Patentschrift: **25.03.92**

(21) Anmeldenummer: **87114856.5**

(22) Anmeldetag: **12.10.87**

(51) Int. Cl.⁵: **B65G 13/10**, B65G 47/54

(54) Transporteinrichtung zur Umlenkung von Stückgütern in einer Ebene.

(43) Veröffentlichungstag der Anmeldung:
**19.04.89 Patentblatt 89/16**

(45) Bekanntmachung des Hinweises auf die
Patenterteilung:
**25.03.92 Patentblatt 92/13**

(84) Benannte Vertragsstaaten:
**BE CH DE FR GB IT LI NL SE**

(56) Entgegenhaltungen:
**DE-A- 2 335 874**
**DE-A- 2 454 272**
**DE-C- 2 261 936**
**GB-A- 1 200 725**
**US-A- 3 592 333**

**SOVIET INVENTIONS ILLUSTRATED, Sektion Mechanik, Woche K35, 12. Oktober 1983, Zusammenfassung Nr. 751467 O35, Derwent Publications Ltd., London, GB; && SU - A - 967 879 (MANDRIN) 23.10.1982**

(73) Patentinhaber: **CARL SCHENCK AG**
**Landwehrstrasse 55 Postfach 40 18**
**W-6100 Darmstadt(DE)**

(72) Erfinder: **Zörgiebel, Karl Heinz**
**Marktplatz 6**
**W-6101 Reichelsheim(DE)**
Erfinder: **Ackermann, Konrad**
**Michelbacher Strasse 23**
**W-6101 Reichelsheim(DE)**
Erfinder: **Strassner, Ernst**
**Heubergweg 822**
**W-6123 Bad König 2(DE)**

(74) Vertreter: **Dallhammer, Herbert, Dipl.-Ing.**
**CARL SCHENCK AG Patentabteilung Postfach 4018 Landwehrstrasse 55**
**W-6100 Darmstadt(DE)**

## Beschreibung

Die Erfindung betrifft eine Transporteinrichtung zur Umlenkung von Stückgütern in einer Ebene, wobei die Stückgüter sich auf in einem Raster orthogonaler Reihen angetriebenen Wälzkörpern abstützen, die mit ihrer tragenden Oberfläche eine Abdeckung teilweise überragen und auf einer Abstützung gelagert sind, wobei das Raster aus Förderrollen besteht, jede Förderrolle über eine Achse in Schlitzen in zugeordneten Gehäusen geführt wird, sich das Gehäuse drehbar auf einer in Transportrichtung verlaufenden angeordneten Lagerung abstützt, eine im Gehäuse unterhalb der Förderrolle gelagerte, angetriebene Reibscheibe die Förderrolle antreibt, wobei die Reibscheibe über ein endloses Antriebselement mit in einer zur Umlenkebene parallelen Ebene unterhalb der Reibscheibe angeordneten Antriebswelle verbunden ist, wobei mehrere parallel zueinander angeordnete Antriebswellen zum Antrieb eines Förderrollenrasters vorgesehen sind, die drehbaren Gehäuse mit einer im wesentlichen parallel zur Umlenkebene angeordneten Verstelleinrichtung zur Verschwenkung des Förderrollenrasters verbunden sind und wobei mindestens ein Antriebsmotor die Antriebswellen antreibt.

Ein gattungsgemäße Vorrichtung ist aus der Praxis vorbekannt.

Durch die GB-A 12 00 725 sind alle Merkmale des Oberbegriffs mit Ausnahme, daß die Förderrollen in Schlitzen des Gehäuses geführt sind, daß die Förderrollen durch Reibscheiben angetrieben werden, die unterhalb der Förderrolle gelagert sind, daß die Reibscheiben über ein endloses Antriebsmittel mit in einer zur Umlenkebene parallelen Ebene unterhalb der Reibscheibe angeordneten Antriebswelle verbunden sind, daß mehrere parallel zueinander angeordnete Antriebswellen vorgesehen sind, die zum Antrieb eines Förderrollenrasters dienen und daß mindestens ein Antriebsmotor die Antriebswellen antreibt, bekannt geworden.

Durch die DE-A 24 54 272 sind Förderrollen bekannt geworden, die in Schlitzen des Gehäuses geführt sind und es sind hierdurch auch mehrere, parallel zueinander angeordnete Antriebswellen bekannt geworden, die zum Antrieb des Förderrollenrasters vorgesehen sind.

Die weiteren Merkmale, die im Oberbegriff des unabhängigen Anspruchs 1 enthalten sind, das sind die Förderrollen, welche über Reibscheiben angetrieben werden, die unterhalb der Förderrolle gelagert sind, die Reibscheiben, die über ein endloses Antriebsmittel mit in einer zur Umlenkebene parallelen Ebene unterhalb der Reibscheibe angeordneten Antriebswelle verbunden sind und die Maßnahme mindestens einen Antriebsmotor zum Antreiben der Antriebswellen zu benutzen, sind aus der DE-A 23 35 874 bekannt geworden.

Ausgehend von dem gattungsgemäßen Stand der Technik liegt der Erfindung die Aufgabe zugrunde, eine Umlenkung zu transportierender Güter zu erreichen, ohne daß eine Relativverschiebung zwischen Abdeckung und der die Wälzkörper tragenden Abstützung auftritt bei gleichzeitiger Verringerung der Flächenpressung. Diese Aufgabe wird ausgehend von dem zunächst gennanten Stand der Technik mit den Merkmalen des kennzeichnenden Teils des Anspruchs 1 gelöst. Durch die erfinderische Ausgestaltung des drehbaren Gehäuses als Hohlzylinder, an dessen Außenzylindermantel ein Tragring angeordnet ist, der auf seinem der Abstützung zugewandten Flansch eine Ringnut zur Aufnahme von Kugeln trägt und dessen anderer Flansch einen Nocken trägt, der mit der Verstelleinrichtung verbindbar ist und wobei die Verstelleinrichtung als Blech auf den Nocken tragenden Tragring aufliegt, wird die der Erfindung zugrundeliegende Aufgabe gelöst.

Die in Anspruch 2 unter Schutz gestellte Verstelleinrichtung, die über in der Transporteinrichtung drehbar gelagerte Doppelhebel von einem Verstellmotor über Verbindungsgestänge geradlinig hin- und herbewegbar ist, stellt eine Ausgestaltung der Erfindung gemäß Anspruch 1 dar.

Eine besonders zweckmäßige Oberflächenausgestaltung von Förderrolle und Reibrad, welche weiterhin zur Unterstützung dient, die Flächenpressung zu verringern, wird in Anspruch 3 unter Schutz gestellt und zeichnet sich dadurch aus, daß die Förderrolle 13 eine konvexe Tragfläche und die Kopfflächen der Wangen der Reibscheibe entsprechend konkav ausgebildet sind.

Die offenbarte Transporteinrichtung zur Umlenkung von Stückgütern läßt sich ohne weiteres in geradlinig verlaufende Förderstränge einbauen, ohne daß bei einer erforderlich werdenden Umlenkung eines Stückguts, beispielsweise einer Palette, ein Absenken der in anderer Richtung fördernden Fördereinheiten oder Anheben der Transporteinrichtung zur Umlenkung erforderlich ist. In der nachfolgenden Zeichnung wird der Gegenstand der Erfindung anhand schematisch dargestellter Ausführungsbeispiele näher erläutert.

Es zeigen:

Fig. 1 eine erfindungsgemäße Anordnung von Förderrolle, Reibscheibe und Antrieb

Fig. 2 einen Schnitt durch eine erfindungsgemäße Umlenkanordnung und

Fig. 3 eine Draufsicht auf eine erfindungsgemäße Umlenkanordnung mit Antrieb.

In den Figuren werden gleiche Bauteile mit denselben Bezugsziffern bezeichnet.

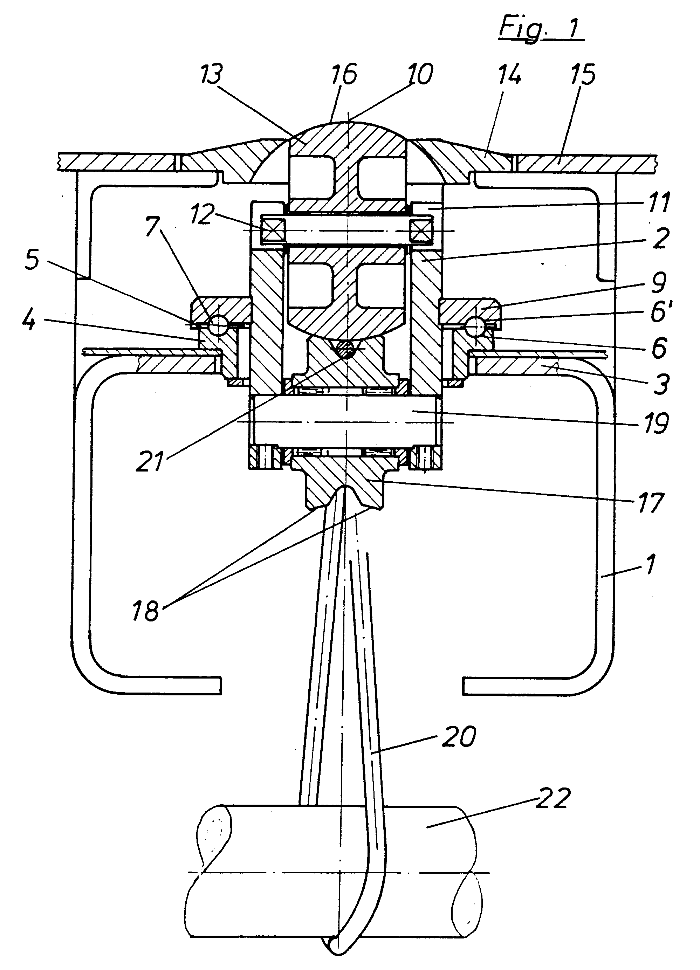

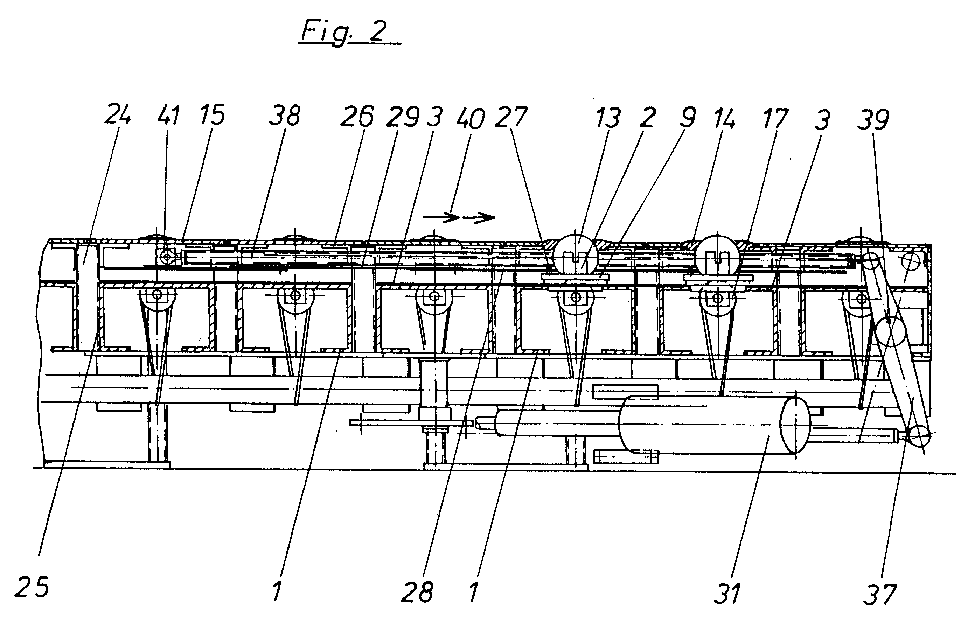

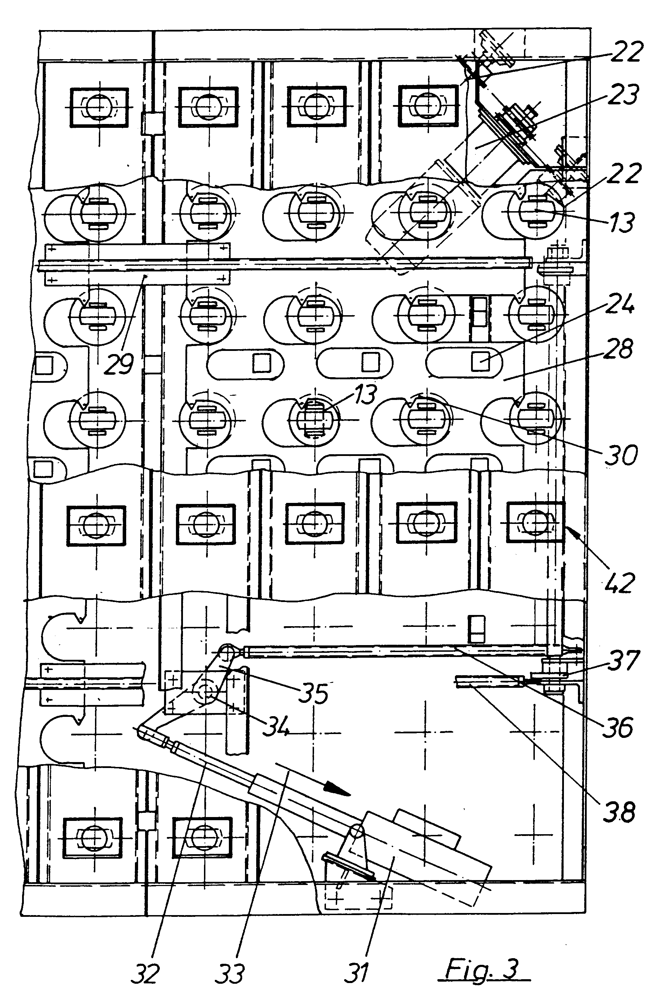

Gemäß Fig. 1 sind in einem u-förmigen Träger 1, der über die gesamte Förderbreite sich erstreckt (vgl. Fig. 2 und 3) Gehäuse 2 vorgesehen, die im Steg 3 des u-förmigen Trägers 1 in einem Ringflansch 4 gelagert sind, dessen obere Flanschfläche 5 eine Ringnut 6 zur Aufnahme von Kugeln 7 trägt. Das Gehäuse 2 trägt an seinem Außenmantel 8 einent Tragring 9, der ebenfalls eine Ringnut 6′ zur Aufnahme der Kugeln 7 trägt. Hiermit kann das Gehäuse um seine vertikale Achse 10 verdreht werden. Im Oberteil des Gehäuses 2 sind Schlitze 11 vorgesehen, in der eine Welle 12 einer Förderrolle 13 gelagert ist. Im Bereich des Gehäuses 2 ist die Welle 12 abgeflacht, so daß eine Rotation der Welle 12 eindeutig vermieden wird, bei gleichzeitiger einfachen Entnahmemöglichkeit der Förderrolle 13 aus dem Gehäuse 2, wenn ein Führungseinsatz 14 aus einer Abdeckung 15 der Transporteinrichtung herausgenommen wird.

Die Förderrolle 13 ragt zum einen mit einer konvexen Tragfläche 16 über die Abdeckung 15 hinaus und wird zum andern von konkaven Kopfflächen 18 einer Reibscheibe 17 angetrieben. Die Reibscheibe 17 befindet sich unterhalb der Förderrolle 13 und ist in einer im Gehäuse 2 angeordneten Achse 19 gelagert.

Die Reibscheibe 17 wird gemäß Ausführungsbeispiel von einem Rundriemen 20 angetrieben, der in einer Nut 21 der Reibscheibe 17 geführt ist. Der Rundriemen 20 umschlingt eine Antriebswelle 22, die in einer parallelen Ebene zur Förder- und Umlenkebene verläuft und von einem Antriebsmotor 23 (vgl. Fig. 3) angetrieben wird.

Gemäß Fig. 2 ist eine Anzahl von u-förmigen Trägern 1 über Rechteckrohre 24 (vgl. auch Fig. 3) mittels ihrer Schenkel 25 verbunden. Während die Stege 3 der u-förmigen Träger 1 die Gehäuse 2 mit den Förderrollen 13 und den Reibscheiben 17 tragen. Die Abdeckung 15 ist mit Winkelschienen 26 verbunden, über die die Förderrollen 13 geführt in einem Führungseinsatz 14 hinausragen.

Die Gehäuse 2 sind über Nocken 27 mit Verstelleinrichtungen 28 verbunden. Im Ausführungsbeispiel bestehen die Verstelleinrichtungen 28 aus einzelnen Blechen, die mit Blechlaschen 29 verbunden sind. Die Verstelleinrichtungen 28 stützen sich auf dem Tragring 9 ab und werden von einem Verstellmotor 31 geradlinig in eine andere Endlage verstellt. Zufolge geradliniger Bewegung der Verstelleinrichtungen 28 bewegen die mit diesen Verstelleinrichtungen 28 verbundenen Nocken 27 zwangsläufig die Gehäuse 2 um einen Winkel von 90°, so daß das zu fördernde Stückgut eine rechtwinklige Umlenkung in einer Ebene erfährt.

Um die in Fig. 3 dargestellte Lage der Förderrollen 13 in eine hierzu senkrechte Lage, wie gestrichelt dargestellt, zu bewegen, wird ein Hubkolben 32 in Richtung eines Pfeiles 33 bewegt. Hierdurch wird ein um einen Drehpunkt 34 drehbarer Doppelhebel 35 veranlaßt, eine Zugstange 36 entsprechend zu bewegen, so daß über einen zweiten Doppelhebel 37 eine Schubstange 38 um einen weiteren Drehpunkt 39 in Richtung eines Doppelpfeiles 40 bewegt wird. Nachdem die Schubstange 38 über ein Gelenk 41 mit einer der Verstelleinrichtungen 28 verbunden ist und die Verstelleinrichtung 28 selbst mit dem Nocken 27 des Gehäuses 2 verbunden ist, wird hierdurch das Gehäuse und damit die Förderrolle 13 um 90° gedreht.

Anstelle einer 90°-Drehung kann jedoch auch ein anderer Winkel der Förderrolle eingestellt werden, so daß eine beliebige Abförderung in beliebiger Richtung durchgeführt werden kann.

Das in den Figuren dargestellte Aufführungsbeispiel besitzt ein quadratisches Förderrollenraster. In diesem Falle sind die Antriebswellen 22 unter einem Winkel von 45° zu den 90°-Förderrichtungen geneigt. Besitzt die Umlenkeinrichtung jedoch aus technischen Gegebenheiten ein von einem quadratischen Rollenraster abweichendes Rollenraster, ändert sich zwangsläufig die Winkellage der Antriebswellen 22 zu einer 90°-Umlenkung des auf diesem Förderrollenraster 42 transportierten Stückgutes.

## Patentansprüche

1. Transporteinrichtung zur Umlenkung von Stückgütern in einer Ebene, wobei die Stückgüter sich auf in einem Raster orthogonaler Reihen angetriebenen Wälzkörpern (13) abstützen, die mit ihrer tragenden Oberfläche (16) eine Abdeckung (15) teilweise überragen und auf einer Abstützung gelagert sind, wobei das Raster aus Förderrollen (13) besteht, jede Förderrolle (13) über eine Achse (12) in Schlitzen (11) eines ihr zugeordneten Gehäuses (2) geführt wird, sich das Gehäuse (2) drehbar auf einer in Transportrichtung verlaufenden Lagerung (1) abstützt, eine im Gehäuse (2) unterhalb der Förderrolle (13) gelagerte, angetriebene Reibscheibe (17) die Förderrolle (13) antreibt, wobei die Reibscheibe (17) über ein endloses Antriebselement (20) mit in einer zur Umlenkebene parallelen Ebene unterhalb der Reibscheibe (17) angeordneten Antriebswelle (22) verbunden ist, mehrere parallel zueinander angeordnete Antriebswellen (22) zum Antrieb eines Förderrollenrasters (42) vorgesehen sind, wobei die drehbaren Gehäuse (2) mit einer im wesentlichen parallel zur Umlenkebene angeordneten Verstelleinrichtung (28) zur Verschwenkung des Förderrollenraster (42) verbunden sind, und wobei ein Antriebsmotor (23) die Antriebswellen (22) antreibt, dadurch gekennzeichnet, daß das drehbare Gehäuse (2) als Hohlzylinder ausgebildet ist, daß an dessen Außenzylindermantel (8) ein Tragring (9) angeordnet ist, der auf seinem der Abstützung zugewandtem Flansch eine Ringnut (6') zur Aufnahme von Kugeln (7) trägt und dessen anderer Flansch einen Nocken (27) trägt, der mit der Verstelleinrichtung (28) verbindbar ist, und daß die Verstelleinrichtungen (28) als Blech auf dem den Nocken (27) tragenden Tragring (9) aufliegt.

2. Transporteinrichtung nach Anspruch 1, dadurch gekennzeichnet, daß die Verstelleinrichtung (28) über in der Transporteinrichtung drehbar gelagerte Doppelhebel (35, 37) von einem Verstellmotor (31) über Verbindungsgestänge (32, 36, 38, 41) geradlinig hin- und herbewegbar ist.

3. Transporteinrichtung nach Anspruch 1 oder 2, dadurch gekennzeichnet, daß die Förderrolle (13) eine konvexe Tragfläche (16) und die Kopfflächen (18) der Wangen der Reibscheibe (17) entsprechend konkav ausgebildet sind.

## Claims

1. A transportation device for deflecting piece goods in a plane, in which the pieces are supported on roll bodies (13) which are driven in a raster of orthogonal rows, said roll bodies partially projecting beyond a cover (15) with their supporting surface (16) and being mounted on a support, in which the raster consists of conveyer rollers (13), each conveyer roller (13) being held by an axle (12) in slits (11) of a casing (2) associated therewith, the casing (2) being pivotally supported on a bearing (1) which runs in the direction of transportation, and a friction disc (17) which is driven and is mounted in the casing (2) underneath the conveyer roller (13) drives the conveyer roller (13), in which the friction disc (17) is connected via an endless drive element (20) to a drive shaft (22) which is aranged in a plane parallel to the deflection plane underneath the friction disc (17), several drive shafts (22) arranged parallel to each other are provided for the drive of a conveyer roller raster (42), in which the rotatable casings (2) are connected to an adjusting device (28) arranged substantially parallel to the deflection plane, for pivoting the conveyer roller raster (42), and in which a drive motor (23) drives the drive shafts (22), characterised in that the rotatable casing (2) is formed as a hollow cylinder, that a support ring (9) is arranged on its outer cylinder sleeve (8), said ring having, on its face facing the support, an annular groove (6') for receiving balls (7) and its other face having a cam (27) which can be connected to the adjusting device (28), and that the adjusting devices (28) rests as a plate on the support ring (9) supporting the cam (27).

2. A transportation device according to claim 1, characterised in that the adjusting device (28) can be moved backwards and forwards in a straight line by means of double levers (35,37) pivotally mounted in the transportation device, by an adjustment motor (31) via connecting rods (32,36,38,41).

3. A transportation device according to claim 1 or 2, characterised in that the conveyer roller (13) has a convex support surface (16) and the head surfaces (18) of the side walls of the friction disc (17) are formed correspondingly in concave form.

## Revendications

1. Dispositif de transport pour retourner au même niveau des colis de détail, ces derniers prenant appui sur des rangées perpendiculaires de corps de roulement (13) entraînés, disposés en une grille, qui dépassent partiellement une recouvrement (15) à l'aide de leur surface porteuse (16) et sont montés sur un appui, la grille se composant de rouleaux de transport (13), dont chacun est guidé, par l'intermédiaire d'un axe (12), dans un chariot (11) d'un carter (2) lui étant associé, le carter prenant appui, en pouvant tourner, sur un support (1) orienté dans la direction du transport, un disque de friction (17) entraîné, monté dans le carter (2), en dessous du rouleau de transport (13) entraînant ce dernier, le disque de friction (17) étant relié, par l'intermédiaire d'un élément d'entraînement continu (20), à un arbre d'entraînement (22), disposé au-dessous du disque de friction (17), dans un plan parallèle au plan de retour, plusieurs arbres d'entraînement, disposés parallèlement entre eux, étant prévus pour entraîner une grille de rouleaux de transport (42), où les carters tournant (2) sont reliés à un dispositif de déplacement de réglage (28) disposé sensiblement parallèlement au plan de retour, en vue de faire pivoter la grille de rouleaux de transport (42), et où un moteur d'entraînement (23) entraîne les arbres d'entraînement (22) caractérisé en ce que le carter tournant (2) est réalisé sous forme de cylindre creux, en ce qu'une bague support (9) est disposée sur son enveloppe cylindrique extérieure (8) et porte, sur sa bride tournée vers l'appui, une gorge annulaire (6'), en vue de supporter des billes (7) et dont l'autre bride porte une came (27), susceptible d'être reliée au dispositif de déplacement de réglage (28) et en ce que les dispositifs de déplacement de réglage (28) reposent comme une tôle sur la bague support (9) qui porte la came (27).

2. Dispositif de transport selon la revendication 1, caractérisé en ce que le dispositif de déplacement de réglage (28) est déplaçable en s'éloignant et en se rapprochant en ligne droite, par l'intermédiaire de leviers doubles (35,37) montés tournants dans le dispositif de transport, au moyen d'un moteur de réglage (31) et par l'intermédiaire d'une tringlerie de liaison (32,36,28,41).

3. Dispositif de transport selon la revendication 1 ou 2, caractérisé en ce que le rouleau de transport (18) présente une surface porteuse (16) convexe et les surfaces de tête (17) des joues de la poulie de friction (17) étant réalisée avec la concavité correspondantes.

_Fig. 1_

# Fig. 2

EP 0 311 699 B1

*Fig. 3*